# EUROPEAN PATENT SPECIFICATION

(11) **EP 1 745 666 B1**
(45) Date of publication and mention of the grant of the patent: **12.11.2008**
(21) Application number: 04731890.2
(22) Date of filing: 10.05.2004
(51) Int. Cl.: H04Q 7/38, H04L 12/56

(54) **METHOD AND APPARATUS FOR PERFORMING A PERMISSION STATUS CHECK OF A MOBILE EQUIPMENT**
VERFAHREN UND VORRICHTUNG ZUR DURCHFÜHRUNG EINER ZULASSUNGSSTATUSPRÜFUNG EINES MOBILEN GERÄTS
PROCEDE ET DISPOSITIF PERMETTANT DE VERIFIER LE STATUT D'AUTORISATION D'UN EQUIPEMENT MOBILE

(43) Date of publication of application: 24.01.2007
(73) Proprietor: TELEFONAKTIEBOLAGET LM ERICSSON (publ), 164 83 Stockholm (SE)
(72) Inventor: IOVIENEO, Maurizio, I-84085 Mercato San Severino (IT)
(74) Representative: Tonscheidt, Andreas
(86) International application number: PCT/EP2004/004972
(87) International publication number: WO 2005/109937

(56) References cited:
- EP-A- 1 379 097

## Description

### Field of invention

The invention relates to a method and a device to enable and to perform a check of a permission status of a mobile equipment.

### Description of prior art

According to the state of the art mobile networks such as GSM (Global System for Mobile Communications) networks, GPRS (General Packet Radio Service) networks or UMTS (Universal Mobile Telecommunication System) networks comprise a database for storing identifications of mobile equipment according to a permission status of the mobile equipment. An example of an identification of mobile equipment according to the 3GPP (3^{rd} Generation Partnership Project) is the IMEI (International Mobile Equipment Identity) as described in the TS (technical specification) 22.106 of the 3GPP. A database for storing identifications of mobile equipment according to a permission status is the EIR (Equipment Identity Register) as specified for GSM, GPRS and UMTS networks.

A known method for classifying the permission status of a mobile equipment is the assignment of the identification of a mobile equipment to a white list or to a black list. Mobile equipment assigned to the white list is deemed to be permitted for use. Mobile equipment assigned to the black list is deemed not permitted for use and should be barred. An additional register that may be used by an operator of a mobile network is a gray list comprising equipment that is deemed permitted for use but should be monitored.

According to the state of the art a check of the permission status of a mobile equipment may be performed by the core network node where the subscriber, who is using the mobile equipment is currently registered, i.e. the MSC (Mobile Services Switching Centre) respectively the SGSN (Serving GPRS Support Node) currently serving the subscriber who is using the mobile equipment. A network architecture to perform that check of the permission status is specified in the TS 23.002 of the 3GPP. A check of the permission status may be performed via a so-called F-interface between the MSC and the EIR respectively via a so-called Gf- interface between the SGSN and the EIR. To perform the permission status check signaling messages compliant to the MAP (mobile application part) protocol may be used.

If a mobile equipment is assigned to the black list, i.e. the mobile equipment is 'black-listed' or if the mobile equipment is not assigned to the white list i.e. the mobile equipment is 'unknown', the outcome of a check of the permission status of a mobile equipment may be a termination of the transaction performed using the mobile equipment. I.e. the network may terminate an access attempt or ongoing call.

According to the state of the art the permission status of a mobile equipment may be checked at any access attempt of the mobile equipment. In addition to that a permission status of a mobile equipment may be checked at regular intervals or at particular events such as a location update of the mobile equipment.

To avoid misuse of mobile equipment as much as possible a large number of checks of the permission status has to be performed, thus creating a high processing load in the core network node administrating the subscribers utilizing the mobile equipment and a high signaling load on the interface between the core network node and the equipment database.

EP-A-1 379 097 discloses a method and system for tracing the use of mobile equipment and reporting illegal mobile equipment to a Customer Service Billing System.

It is object of the invention to provide a method for checking the security status of a mobile equipment that reduces the processing and signaling load for the status checking.

### Summary of the invention

This object is achieved by the method of claim 1 and the mobile equipment database of claim 2. Advantageous embodiments are described in the dependent claims.

According to the present invention a method is provided for enabling a check of a permission status associated with a registered mobile equipment. The invented method comprises the following steps:
- receiving an indication of a current change of a permission status associated with the registered mobile equipment,
- determining an address of a core network node currently administrating the subscriber utilizing the registered mobile equipment, and
- sending a trigger message indicating the change of the permission status of the registered mobile equipment towards the core network node and triggering a check of the permission status associated with the registered mobile equipment, the trigger message comprising an identification of the registered mobile equipment.

The trigger message may also comprise the currently changed permission status associated with the mobile equipment.

The method is advantageous in that it allows reducing the required number of checks of the security status significantly, i.e. in principle a security check only need to be performed when the security status associated with the mobile equipment has changed. This provides a significant reduction on processing power and signalling related to permission status checks.

In an advantageous embodiment of the method determining the address of the core network node comprises the steps of:
- receiving a message from the core network node, said message comprising an address of the core network node and an identification of the registered mobile equipment,
- storing the address of the core network node in a way that enables to retrieve it using the identification of the registered mobile equipment, and
- retrieving the address of the core network node using the identification of the registered mobile equipment.

This method to determine the address of the core network node is advantageous in that it may utilize existing interfaces between a core network node and a mobile equipment database that implements the invention.

In a further embodiment of the invented method determining the address of the core network node comprises the steps of:
retrieving an identification of a subscriber currently utilizing the registered mobile equipment from a database storing identifications of subscribers in relation to respective identifications of mobile equipment utilized by the subscribers, and
   - retrieving the core network node currently administrating the subscriber utilizing the registered mobile equipment from a database storing an identification of a visited core network node in relation to an identification of a visiting subscriber.

By this existing databases may be used and modifications in the implementation of a mobile equipment database can be minimized.

The invention is further embodied in a method for performing a check of a permission status associated with a mobile equipment. This method comprises the steps of:
- receiving a trigger message indicating a change of the permission status of the mobile equipment and triggering a check of the permission status of the mobile equipment, said trigger message comprising an identification of the mobile equipment,
- retrieving the permission status associated with the mobile equipment,
- receiving an indication of a transaction performed using the mobile equipment, the indication of the transaction comprising the identification of the mobile equipment, and
- according to the determined permission status terminating the performed transaction or not.

The permission status may be transmitted with the trigger message, and stored in the core network node in a way that it is retrievable using the identification of the mobile equipment or, alternatively, the permission status may be retrieved from a mobile equipment data base upon the indication that a transaction is performed using the mobile equipment and therefore the permission status of the mobile equipment needs to be checked.

The invention is further embodied in a mobile equipment database for registering mobile equipment according to a permission status. The database enables a check of a permission status associated with a registered mobile equipment and the database comprises:
a first interface for being indicated a current change of a permission status associated with the registered mobile equipment,
an address determination unit for determining an address of a core network node currently administrating the subscriber utilizing the registered mobile equipment, and
an interface towards the core network node for sending a trigger message indicating a current change of a permission status of the registered mobile equipment and triggering a check of the permission status of the registered mobile equipment, the trigger message comprising an identification of the registered mobile equipment.

The trigger message may also comprise the currently changed permission status associated with the mobile equipment.

The invented mobile equipment database is advantageous in that it allows reducing the required number of checks of the security status significantly, i.e. in principle a security checking only need to be performed when the security status associated with the mobile equipment has changed. This provides a significant reduction on processing power and signalling related to permission status checks.

In an advantageous embodiment of the mobile equipment database the address determination unit is adapted to process a message from the core network node. Said message comprises an address of the core network node and an identification of the registered mobile equipment. The address determination unit in this embodiment comprises a storage unit for storing the address of the core network node in a way that enables to retrieve it using the identification of the registered mobile equipment and for providing the address of the core network node when looked up using the identification of the registered mobile equipment.

This mobile equipment database is advantageous in that it may utilize existing interfaces between a core network node and the mobile equipment database.

In another embodiment of the mobile equipment database the address determination unit comprises an interface towards a first database storing identifications of subscribers in relation to respective identifications of mobile equipment utilized by the subscribers, an interface towards a second database storing an identification of a visited core network node in relation to an identification of a visiting subscriber. Further the database in this embodiment comprises a processing unit for determining an identification of a subscriber currently utilizing the registered mobile equipment using a request to the first database and for determining the core network node currently administrating the subscriber utilizing the registered mobile equipment using a request to the second database.

In this embodiment of the mobile equipment database existing databases may be used and modifications in the implementation of a mobile equipment database can be minimized.

The invention is further embodied in a core network node for performing a check of a permission status associated with a mobile equipment. The core network node comprises:
- an interface towards a mobile equipment database registering mobile equipment according to a permission status,
- a processing unit for processing a trigger message received via the interface towards the mobile equipment database, the trigger message indicating a current change of a permission status of a mobile equipment, and triggering a check of the permission status of the mobile equipment, the trigger message comprising an identification of the mobile equipment,
- a processing device for retrieving the current permission status of the mobile equipment,
- an interface towards the mobile equipment for receiving an indication of a transaction performed using the mobile equipment, the indication of the transaction comprising the identification of the mobile equipment, and
- a transaction termination unit for terminating the performed transaction according to the determined permission status or not.

The permission status may be transmitted with the trigger message, and stored in the core network node in a way that it is retrievable using the identification of the mobile equipment or, alternatively, the permission status may be retrieved from a mobile equipment database upon the indication that a transaction is performed using the mobile equipment and therefore the permission status of the mobile equipment needs to be checked.

### Brief description of the drawings

Figure 1 depicts a signal flow between entities involved in a check of a security status of a mobile equipment.
Figure 2 depicts a mobile equipment database according to the invention.
Figure 3 depicts a core network node according to the invention.

### Detailed description of embodiments

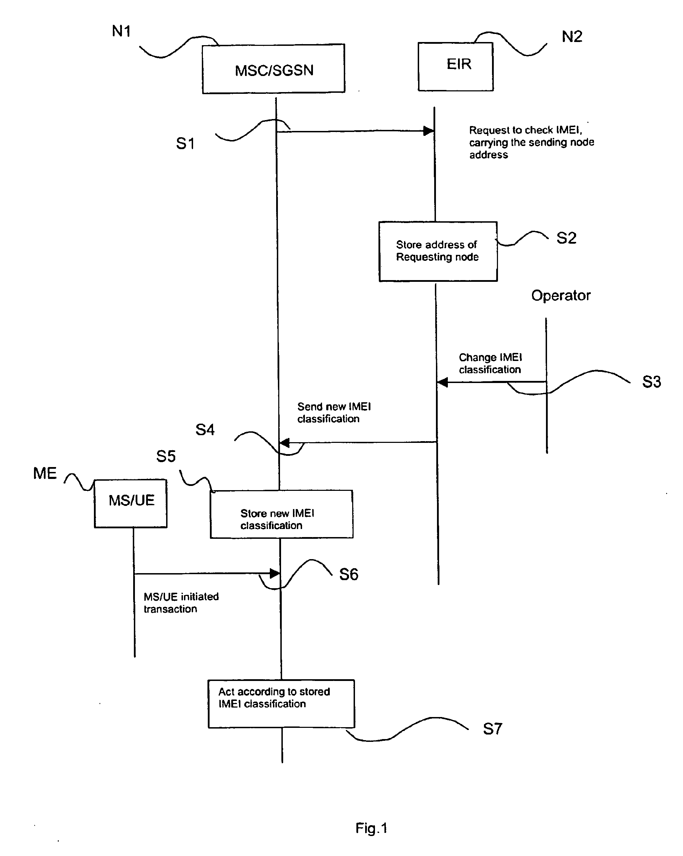

Fig. 1 depicts a method to enable and to perform a check of a security status of a mobile equipment ME in telecommunication network. For reasons of simplicity only entities of the telecommunication network that are involved in the check of the security status are shown. The telecommunication network may be a e.g. a GSM network, a GPRS network or a UMTS network. The telecommunication network comprises a core network N1 node administrating the subscriber that is currently using the mobile equipment ME or in other words the core network node that is currently serving the subscriber utilizing the mobile equipment ME. In case of a GSM network the core network node N 1 may be a MSC (Mobile Services Switching Center) and in case of a GPRS or UMTS network the core network node N 1 may be an SGSN (Serving GPRS support Node).

The telecommunication network further comprises an equipment database N2 storing identifications of mobile equipment associated to a permission status for the mobile equipment. The equipment database may be e.g. an EIR (Equipment Identity Register) and the permission status may be e.g. 'white listed' indicating that the respective mobile equipment is deemed to be permitted for use, 'black listed' indicating that the respective mobile equipment is deemed not permitted for use and should be barred, or 'gray listed' indicating that the respective equipment is deemed permitted for use but should be monitored. To indicate the different permission statuses, the equipment database N2 may comprise a different register for each permission status. The mobile equipment ME is registered with the equipment database N2.

To provide addressing the core network node N1 administrating the subscriber currently using the mobile equipment ME, the equipment database N2 may perform some initiating steps. Upon reception of a message S1 from the core network node N1, said message comprising an address of the core network node CN and an identification of the mobile equipment ME, the equipment database may in a step S2 store the address of the core network node N 1 in a way that it is retrievable using the identification of the mobile equipment ME. The message S 1 maybe a new MAP (mobile application part) message that comprises an address of the core network node N1, e.g. an ISDN (integrated services digital network) number assigned to the core network node N1.

In an indicating step S3 a current change of a permission status associated with the registered mobile equipment is indicated to the equipment database N2, e.g. the operator may have been indicated that the mobile equipment ME has been stolen and should be 'black-listed' accordingly.

The change of the permission status of the mobile equipment ME is indicated towards the core network node CN in a trigger message S4 together with an identification of the mobile equipment ME to trigger a check of the permission status associated with the registered mobile equipment ME. The trigger S4 message may be a new MAP message.

In addition to indicating the change of the transmission status, the trigger message S4 may also comprise the new permission status. In this case, the currently changed permission status maybe stored in the core network node CN in a step S5 to be retrievable using the identification of the mobile equipment ME that has been sent with the message S4.

To provide addressing the core network node CN the previously stored address of the core network node CN may be retrieved using the identification of the mobile equipment ME.

Alternatively to the above-described method for determining the address of the core network node administrating the subscriber who is using the mobile equipment, the address of the core network node (N1) may be retrieved from the identification of the mobile equipment by subsequent database queries. Using a first database query comprising the identification of the mobile equipment an identification of the subscriber currently utilizing the registered mobile equipment may be retrieved from a database storing identifications of subscribers in relation to respective identifications of mobile equipment utilized by the subscribers. Such a database maybe a stand-alone database or maybe comprised a subscriber database serving further purposes such an HLR (Home Location Register) or an HSS (Home Subscriber Server). Using a second database query comprising the obtained identification of the subscriber, the identification of the core network node N1 currently administrating the subscriber utilizing the mobile equipment ME may be retrieved the from a database storing an identification of a visited core network node in relation to an identification of a visiting subscriber. Such a database maybe e.g. an HLR (Home Location Register) or an HSS (Home Subscriber Server).

When the subscriber utilizing the mobile equipment performs a next transaction, the core network node N1 may receive an indication of the transaction in a message S6 from the subscriber, the message comprising the identification of the mobile equipment ME. The transaction may be e.g. a location update or an attach of the subscriber utilizing the mobile equipment.

According to the indication of the transaction the core network nodes performs a check of the permission status of the mobile equipment. If the current permission status of the mobile equipment has not been transmitted previously, the core network node may retrieve the current permission status of the mobile equipment ME from the equipment data base N2 using the identification of the mobile equipment ME.

Alternatively, if the current permission status has been previously transmitted and stored in the core network node N 1, the core network node N 1 may use the identification of the mobile equipment and retrieve the previously stored permission status associated with the mobile equipment ME.

According to the determined permission status the core network node N1 may a step S7 terminate the transaction of the mobile equipment or not. I.e. if the permission status of the mobile equipment is 'white-listed' the transaction may not be terminated and may continue. If the determined permission status is 'black-listed' the transaction may in be terminated and the subscriber may be notified accordingly.

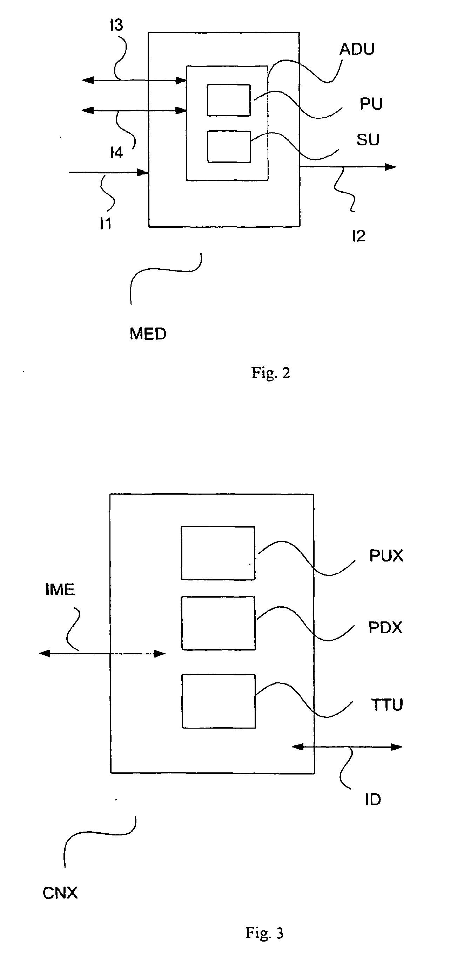

Figure 2 depicts a mobile equipment database MED according to the invention. The mobile equipment database MED registers mobile equipment according to a permission status and enables a check of a permission status associated with a registered mobile equipment.

The mobile equipment database MED comprises a first interface II for being indicated a current change of a permission status associated with the registered mobile equipment. Further the mobile equipment database MED comprises an address determination unit ADU for determining an address of a core network node currently administrating the subscriber utilizing the registered mobile equipment, and second interface 12 towards the core network node for sending a trigger message indicating a current change of a permission status of the registered mobile equipment and triggering a check of the permission status of the registered mobile equipment, the trigger message comprising an identification of the registered mobile equipment.

In a particular embodiment of the address determination unit ADU it may be adapted to determine the address of the core network node in that it processes a message from the core network node, said message comprising an address of the core network node and an identification of the registered mobile equipment. In this embodiment of the address determination unit ADU it comprises a storage unit SU for storing the address of the core network node in a way that enables to retrieve it using the identification of the registered mobile equipment and for providing the address of the core network node when looked up using the identification of the registered mobile equipment.

In another embodiment of the address determination unit ADU it may comprise a third interface 13 towards a first database storing identifications of subscribers in relation to respective identifications of mobile equipment utilized by the subscribers and the address determination unit ADU may comprise a fourth interface 14 towards a second database storing an identification of a visited core network node in relation to an identification of a visiting subscriber. In that embodiment of the address determination unit ADU it also comprises a processing unit PU for determining an identification of a subscriber currently utilizing the registered mobile equipment using a request to the first database and for determining the core network node currently administrating the subscriber utilizing the registered mobile equipment using a request to the second database.

Figure 3 depicts a core network node CNX for performing a check of a permission status associated with a mobile equipment.

The core network node comprises an interface ID towards a mobile equipment database registering mobile equipment according to a permission status and a processing unit PUX for processing a trigger message received via the interface ID towards the mobile equipment database. The trigger message indicates a current change of a permission status of a mobile equipment, and triggers a check of the permission status of the mobile equipment. The trigger message comprises an identification of the mobile equipment.

The core network node further comprises a processing device PDX for retrieving the current permission status of the mobile equipment and an interface IME towards the mobile equipment for receiving an indication of a transaction performed using the mobile equipment, wherein the indication of the transaction comprises the identification of the mobile equipment.

The core network node further comprises a transaction termination unit TTU for terminating the performed transaction according to the determined permission status or not.

## Claims

1. Method for enabling a check of a permission status associated with a registered mobile equipment (ME), the method comprising the following steps:
- receiving (S3) an indication of a current change of a permission status associated with the registered mobile equipment,
- determining an address of a core network node currently administrating the subscriber utilizing the registered mobile equipment, and
- sending a trigger message indicating (S4) the change of the permission status of the registered mobile equipment towards the core network node (N1) and triggering a check of the permission status associated with the registered mobile equipment, the trigger message comprising an identification of the registered mobile equipment wherein determining the address of the core network node (N1) comprises the steps of: retrieving an identification of a subscriber currently utilizing the registered mobile equipment from a database storing identifications of subscribers in relation to respective identifications of mobile equipment utilized by the subscribers, and retrieving the core network node currently administrating the subscriber utilizing the registered mobile equipment from a database storing an identification of a visited core network node in relation to an identification of a visiting subscriber.

2. Mobile equipment database (MED; N2) for registering mobile equipment according to a permission status, the database (MED; N2) enabling a check of a permission status associated with a registered mobile equipment (ME) and the database comprising:
a first interface (**I**1) for being indicated a current change of a permission status associated with the registered mobile equipment,
an address determination unit (ADU) for determining an address of a core network node currently administrating the subscriber utilizing the registered mobile equipment, and
an interface (12) towards the core network node for sending a trigger message indicating a current change of a permission status of the registered mobile equipment and triggering a check of the permission status of the registered mobile equipment, the trigger message comprising an identification of the registered mobile equipment wherein the address determination unit (ADU) comprises an interface (I3) towards a first database storing identifications of subscribers in relation to respective identifications of mobile equipment utilized by the subscribers, an interface (14) towards a second database storing an identification of a visited core network node in relation to an identification of a visiting subscriber, and a processing unit (PU) for determining an identification of a subscriber currently utilizing the registered mobile equipment using a request to the first database and for determining the core network node currently administrating the subscriber utilizing the registered mobile equipment using a request to the second database,

## Patentansprüche

1. Verfahren zum Ermöglichen einer Prüfung eines Erlaubnisstatus, der mit einer registrierten mobilen Endeinrichtung (ME) assoziiert ist, wobei das Verfahren die folgenden Schritte umfasst:
- Empfangen (S3) einer Anzeige einer aktuellen Änderung eines Erlaubnisstatus, der mit der registrierten mobilen Endeinrichtung assoziiert ist,
- Bestimmen einer Adresse eines Kernnetzknotens, der den Teilnehmer gerade verwaltet, der die registrierte mobile Endeinrichtung verwendet,
- Senden einer Auslösenachricht, die die Änderung des Erlaubnisstatus der registrierten mobilen Endeinrichtung anzeigt (S4), an den Kernnetzknoten (N1) und Auslösen einer Prüfung des Erlaubnisstatus, der mit der registrierten mobilen Endeinrichtung assoziiert ist, wobei die Auslösenachricht eine Kennung der registrierten mobilen Endeinrichtung umfasst und wobei das Bestimmen der Adresse des Kernnetzknotens (N1) die folgenden Schritte umfasst: Abrufen einer Kennung eines Teilnehmers, der die registrierte mobile Endeinrichtung gerade verwendet, von einer Datenbank, die Kennungen von Teilnehmern in Bezug auf jeweilige Kennungen von mobilen Endeinrichtungen speichert, die durch die Teilnehmer verwendet werden, und Abrufen des Kernnetzknotens, der den Teilnehmer gerade verwaltet, der die registrierte mobile Endeinrichtung verwendet, von einer Datenbank, die eine Kennung eines besuchten Kernnetzknotens in Bezug auf eine Kennung eines besuchenden Teilnehmers speichert.

2. Mobilendeinrichtungsdatenbank (MED; N2) zum Registrieren von mobilen Endeinrichtungen gemäß einem Erlaubnisstatus, wobei die Datenbank (MED; N2) eine Prüfung eines Erlaubnisstatus ermöglicht, der mit einer registrierten mobilen Endeinrichtung (ME) assoziiert ist, und die Datenbank umfasst:
eine erste Schnittstelle (I1), der eine aktuelle Änderung eines Erlaubnisstatus angezeigt wird, der mit der registrierten mobilen Endeinrichtung assoziiert ist,
eine Adressbestimmungseinheit (ADU) zum Bestimmen einer Adresse eines Kernnetzknotens, der den Teilnehmer gerade verwaltet, der die registrierte mobile Endeinrichtung verwendet, und
eine Schnittstelle (12) zum Kernnetzknoten zum Senden einer Auslösenachricht, die eine aktuelle Änderung eines Erlaubnisstatus der registrierten mobilen Endeinrichtung anzeigt und eine Prüfung des Erlaubnisstatus der registrierten mobilen Endeinrichtung auslöst, wobei die Auslösenachricht eine Kennung der registrierten mobilen Endeinrichtung umfasst, wobei die Adressbestimmungseinheit (ADU) eine Schnittstelle (13) zu einer ersten Datenbank, die Kennungen von Teilnehmern in Bezug auf jeweilige Kennungen von mobilen Endeinrichtungen speichert, die durch die Teilnehmer verwendet werden, eine Schnittstelle (14) zu einer zweiten Datenbank, die eine Kennung eines besuchten Kernnetzknotens in Bezug auf eine Kennung eines besuchenden Teilnehmers speichert, und eine Verarbeitungseinheit (PU) zum Bestimmen einer Kennung eines Teilnehmers, der die registrierte mobile Endeinrichtung gerade verwendet, unter Verwendung einer Abfrage der erstes Datenbank und zum Bestimmen des Kernnetzkotens, der den Teilnehmer gerade verwaltet, der die registrierte mobile Endeinrichtung verwendet, unter Verwendung einer Abfrage der zweiten Datenbank umfasst.

## Revendications

1. Procédé permettant une vérification d'un statut de permission associé à un équipement mobile (ME) enregistré, le procédé comprenant les étapes suivantes consistant à :
- recevoir (S3) une indication d'un changement actuel d'un statut de permission associé à l'équipement mobile enregistré,
- déterminer une adresse d'un noeud de réseau central administrant actuellement l'abonné utilisant l'équipement mobile enregistré, et
- envoyer un message déclencheur indiquant (S4) le changement du statut de permission de l'équipement mobile enregistré vers le noeud de réseau central (N1) et déclencher une vérification du statut de permission associé à l'équipement mobile enregistré, le message déclencheur comprenant une identification de l'équipement mobile enregistré, dans lequel la détermination de l'adresse du noeud de réseau central (N1) comprend les étapes consistant à : extraire une identification d'un abonné utilisant actuellement l'équipement mobile enregistré d'une base de données mémorisant des identifications des abonnés en relation avec des identifications respectives de l'équipement mobile utilisé par les abonnés, et extraire le noeud de réseau central administrant actuellement l'abonné utilisant l'équipement mobile enregistré d'une base de données mémorisant une identification d'un réseau central visité en relation avec une identification d'un abonné visiteur.

2. Base de données d'équipement mobile (MED ;N2) pour enregistrer un équipement mobile selon un statut de permission, la base de données (MED N2) permettant une vérification d'un statut de permission associé à un équipement mobile (ME) enregistré et la base de données comprenant:
une première interface (I1) pour que soit indiqué un changement actuel d'un statut de permission associé à l'équipement mobile enregistré,
une unité de détermination d'adresse (ADU) pour déterminer une adresse d'un noeud de réseau central administrant actuellement l'abonné utilisant l'équipement mobile enregistré, et
une interface (12) vers le noeud de réseau central pour envoyer un message déclencheur indiquant un changement actuel d'un statut de permission de l'équipement mobile enregistré et déclencher une vérification du statut de permission de l'équipement mobile enregistré, le message déclencheur comprenant une identification de l'équipement mobile enregistré, dans lequel l'unité de détermination d'adresse (ADU) comprend une interface (13) vers une première base de données mémorisant des identifications d'abonnés en relation avec des identifications respectives de l'équipement mobile utilisé par les abonnés, une interface (14) vers une seconde base de données mémorisant une identification d'un noeud de réseau central visité en relation avec une identification d'un abonné visiteur, et une unité de traitement (PU)pour déterminer une identification d'un abonné utilisant actuellement l'équipement mobile enregistré en utilisant une demande vers la première base de données et pour déterminer le noeud de réseau central administrant actuellement l'abonné utilisant l'équipement mobile enregistré en utilisant une demande vers la seconde base de données.
